# EUROPÄISCHE PATENTANMELDUNG

(11) **EP 4 752 422 A1**
(43) Veröffentlichungstag der Anmeldung: **03.06.2026**
(21) Anmeldenummer: 24216652.8
(22) Anmeldetag: 29.11.2024
(51) Int. Cl.: F16M 11/10, B60R 11/00, F16M 11/40, F16M 13/02, G09F 21/04

(54) **HALTERUNGSVORRICHTUNG FÜR EINE DISPLAY-ANZEIGE SOWIE ANZEIGESYSTEM**

(71) Anmelder: Schloissnik, Andreas, 2345 Brunn am Gebirge (AT)
(72) Erfinder: Schloissnik, Andreas, 2345 Brunn am Gebirge (AT)
(74) Vertreter: KLIMENT & HENHAPEL

(57) **Zusammenfassung**

Die Erfindung betrifft eine Halterungsvorrichtung (1) für eine Display-Anzeige (60), umfassend eine Trägerplatte (10) sowie zumindest einen verformbaren Stützbügel (40), wobei der zumindest eine Stützbügel (40) mit zumindest einem Befestigungsmittel (30) der Trägerplatte (10) befestigbar ist und zumindest in befestigter Lage der zumindest eine Stützbügel (40) verformbar ist, um die Trägerplatte (10) in einem wählbaren Neigungswinkel (55) in Bezug zu einer Aufstellfläche aufzustellen. Weiters wird im Rahmen der Erfindung ein Anzeigesystem (100) umfassend eine Halterungsvorrichtung (1) sowie eine Display-Anzeige (60), welche an einer Vorderseite (11) der Trägerplatte (1) lösbar befestigbar ist, angegeben.

## Beschreibung

### GEBIET DER ERFINDUNG

Die Erfindung betrifft eine Halterungsvorrichtung für eine Display-Anzeige. Weiters betrifft die Erfindung ein Anzeigesystem umfassend eine Halterungsvorrichtung sowie eine Display-Anzeige, welche an der Halterungsvorrichtung lösbar befestigbar ist. Erfindungsgemäß kann ein solches Anzeigesystem zur Positionierung im Innenraum eines Kraftfahrzeugs, vorzugsweise zur Aufstellung auf einem Armaturenbrett nahe an einer Windschutzscheibe, verwendet werden, wobei erforderlichenfalls ein Neigungswinkel der Halterungsvorrichtung samt der Display-Anzeige flexibel in Bezug zu einer Aufstellfläche einstellbar ist.

### STAND DER TECHNIK

Aus dem Stand der Technik sind bereits unterschiedliche Ausführungen von Schautafeln zur Preisauszeichnung bekannt, die insbesondere in einem Kraftfahrzeug verwendet werden können.

Beispielsweise ist aus der EP 3 029 658 B1 bereits eine Schautafel mit einem biegesteifen, plattenartigen Trägerteil bekannt. Durch einen fensterartigen Durchbruch des Trägerteils der Schautafel hindurch ist ein Display sichtbar, welches mit einem Halterungselement im Bereich des Durchbruchs an einer Rückseite der Schautafel gehaltert ist. Das Halterungselement ist mit dem Trägerteil beispielsweise durch Verkleben unlösbar verbunden. Um die Schautafel in einem Kraftfahrzeug positionieren zu können, weist die Schautafel an ihrem unteren Rand einen Einsteckabschnitt auf, der von der Schautafel abgewinkelt abragt. Zur Befestigung der Schautafel im Innenraum eines Kraftfahrzeugs muss der abgewinkelte Einsteckabschnitt der Schautafel in einem Lüftungsschlitz des Armaturenbretts nahe der Windschutzscheibe des betreffenden Kraftfahrzeugs eingesteckt werden. Alternativ kann die Schautafel zwischen einer Sonnenblende und der Windschutzscheibe des betreffenden Kraftfahrzeugs klemmgehaltert sein, wobei der abgewinkelte Einsteckabschnitt dabei elastisch verbogen ist und gegen die Windschutzscheibe oder gegen die Sonnenblende drückt, um die Schautafel in ihrer Klemmposition zu fixieren.

Die EP 3 477 621 A1 betrifft einen Preisblatthalter aus Polycarbonat für die Preisauszeichnung von Kraftfahrzeugen. Der Preisblatthalter besteht aus einer Trägerplatte und einer Zunge, die - vergleichbar mit der EP 3 029 658 B1 - in den Lüftungsschlitz im Bereich der Windschutzscheibe eines Kraftfahrzeugs eingeklemmt wird. Um die Trägerplatte insbesondere beim Einsatz mit Funk-Displays zur Preisauszeichnung direkt an die Windschutzscheibe des betreffenden Kraftfahrzeugs pressen zu können, ragt die Zunge zumindest zweifach abgekantet bzw. gebogen unter einem Biegewinkel von etwa 45° von der Trägerplatte ab. Dadurch sollen auch größere Trägerplatten samt einem daran befestigten Funk-Display ortsfest am Armaturenbrett geklemmt werden können.

Nachteilig bei diesen herkömmlichen Ausführungen von Schautafeln zur Preisauszeichnung von Kraftfahrzeugen ist zumindest, dass die Schautafeln zur Befestigung im Fahrzeuginneren jeweils eingeklemmt oder eingesteckt werden müssen. Dies ist nicht nur unpraktisch, da die jeweilige Aufstellposition solcher herkömmlichen Schautafeln jeweils davon abhängt, ob im betreffenden Kraftfahrzeug überhaupt ein geeigneter Lüftungsschlitz nahe der Windschutzscheibe oder eine geeignete Sonnenblende vorhanden sind, um die Schautafeln durch entsprechendes Einstecken oder Einklemmen befestigen zu können. Insbesondere bei neuen, hochwertigen Kraftfahrzeugen kann dies jedoch zu Problemen führen, da beim Einstecken oder Einklemmen solcher Schautafeln Lüftungsschlitze des Armaturenbretts verbogen oder zumindest zerkratzt werden können. Insbesondere bei hochwertigen Kraftfahrzeugen, bei denen beispielsweise ein Head-up-Display an der Oberseite des Armaturenbretts angeordnet ist oder Lüftungsauslässe im Bereich der Windschutzscheibe nicht schlitzförmig sichtbar angeordnet sind, sondern verdeckt in das Armaturenbrett integriert sind, kann es überdies vorkommen, dass solche herkömmlichen Schautafeln am Armaturenbrett gar nicht eingesteckt werden können.

Dies gilt gleichermaßen auch für Sonnenblenden im Inneren eines Fahrzeugs, die beim Anstecken oder Verklemmen solcher Schautafeln beschädigt und zerkratzt werden können.

### AUFGABE DER ERFINDUNG

Eine Aufgabe der vorliegenden Erfindung ist es, eine Halterungsvorrichtung für eine Display-Anzeige anzugeben, welche die aus dem Stand der Technik von Schautafeln zur Preisauszeichnung von Kraftfahrzeugen bekannten Nachteile überwindet und die in flexibler Weise an unterschiedlichen Positionen im Innenraum eines Kraftfahrzeuges aufgestellt werden kann, ohne dazu an Komponenten im Innenraum des betreffenden Kraftfahrzeugs, beispielsweise an Lüftungsschlitzen oder Sonnenblenden, durch Einstecken oder Festklemmen befestigt zu werden. Eine weitere Aufgabe der vorliegenden Erfindung besteht darin, ein verbessertes Anzeigesystem umfassend eine Halterungsvorrichtung sowie eine Display-Anzeige anzugeben, bei dem die Neigung der Display-Anzeige in Bezug zur jeweiligen Aufstellfläche einstellbar ist und das an unterschiedlichen Positionen im Innenraum eines Kraftfahrzeuges aufgestellt werden kann, ohne dabei den Innenraum zu beschädigen.

### DARSTELLUNG DER ERFINDUNG

Zur Lösung der genannten Aufgabe wird eine Halterungsvorrichtung für eine Display-Anzeige angegeben, wobei die Halterungsvorrichtung eine Trägerplatte sowie zumindest einen verformbaren Stützbügel umfasst, wobei der zumindest eine Stützbügel mit zumindest einem Befestigungsmittel an der Trägerplatte befestigbar ist und zumindest in befestigter Lage der zumindest eine Stützbügel verformbar ist, um die Trägerplatte in einem wählbaren Neigungswinkel in Bezug zu einer Aufstellfläche aufzustellen.

Erfindungsgemäß weist die Halterungsvorrichtung eine Trägerplatte auf, die zur Befestigung einer Display-Anzeige verwendet werden kann. Eine digitale Display-Anzeige bietet den Vorteil, dass Informationen zu einem beworbenen Produkt, beispielsweise zu einem Kraftfahrzeug, in besonders komfortabler Weise jeweils aktuell angezeigt werden können. Eine Datenübertragung von jeweils aktuellen Anzeigedaten, beispielsweise von aktuellen Daten zur Preisauszeichnung des betreffenden Produkts, an eine solche Display-Anzeige kann bevorzugt mittels einer drahtlosen Datenverbindung, beispielsweise mittels einer WLAN-, Bluetooth- oder Infrarot-Funkverbindung, einer Funknetzverbindung mittels einer SIM-Karte, die in der Display-Anzeige eingebaut ist, oder einer anderen vergleichbaren Datenverbindung erfolgen. Damit können auf zuverlässige Weise aktuelle Daten beispielsweise zur Preisauszeichnung des betreffenden Produkts sowohl online, als auch vor Ort auf der Display-Anzeige jeweils synchron angezeigt werden.

Alternativ oder ergänzend dazu kann auch die Trägerplatte selbst mit entsprechenden Informationen bedruckt oder beklebt sein. Beispielsweise können solche Informationen direkt auf die Trägerplatte gedruckt oder geklebt sein oder die Trägerplatte kann als Halterung eines entsprechenden Ausdrucks von Informationen beispielsweise auf Papier oder auf Folie dienen. Um die Nachteile einer solchen "analogen" Anzeige zu kompensieren, kann es zweckmäßig sein, wenn beispielsweise ein QR-Code zumindest einen Teil der bereitgestellten ausgedruckten Information bildet. Durch Lesen bzw. Scannen des QR-Codes kann beispielsweise ein entsprechender Link zu zentral verwalteten, jeweils aktuellen Daten insbesondere zur Preisauszeichnung abgerufen werden.

Die Trägerplatte kann beispielsweise quadratisch oder rechteckförmig gestaltet sein.

Erfindungsgemäß wird die Halterungsvorrichtung in ihrer Aufstellposition durch zumindest einen Stützbügel gehaltert, wobei der zumindest eine Stützbügel vorzugsweise an einer Rückseite der Trägerplatte mit zumindest einem Befestigungsmittel befestigbar ist. Der zumindest eine Stützbügel kann beispielsweise mit einer geeigneten Schraubverbindung an der Trägerplatte befestigbar sein. Ebenso kann der zumindest eine Stützbügel beispielsweise mit einer Klebeverbindung an der Trägerplatte befestigbar sein.

Der zumindest eine Stützbügel ist zumindest in seiner an der Trägerplatte befestigten Lage verformbar. Ebenso kann der Stützbügel aus einem Material hergestellt sein, dass auch ohne an der Trägerplatte befestigt zu sein verformbar ist. Beispielsweise trifft dies für einen Schwanenhals-Bügel zu, der für sich genommen durch entsprechendes Verbiegen von Hand verformbar ist.

Der zumindest eine Stützbügel bildet somit in an der Trägerplatte befestigter Lage zumindest ein verformbares Stützbein, das als Stativ für die Halterungsvorrichtung dient. Damit kann die Halterungsvorrichtung in besonders flexibler Weise auf unterschiedlichsten Aufstellflächen selbststehend sowie umfallsicher aufgestellt werden, und zwar jeweils so, dass die Trägerplatte in einem wählbaren Neigungswinkel in Bezug zur jeweiligen Aufstellfläche aufgestellt werden kann. Als mögliche Aufstellflächen für eine erfindungsgemäße Halterungsvorrichtung können beispielsweise geneigte und/oder gewölbte Flächen wie beispielsweise ein Armaturenbrett im Innenraum eines Kraftfahrzeugs dienen.

Je nach Anwendungsfall kann der zumindest eine verformbare Stützbügel auch als Hängehalterung verwendet werden, um die Halterungsvorrichtung an zumindest einem geeigneten Halterungspunkt insbesondere im Innenraum eines Kraftfahrzeugs aufzuhängen bzw. zu positionieren. Beispielsweise kann die erfindungsgemäße Halterungsvorrichtung mit dem zumindest einen verformbaren Stützbügel an einer Sonnenblende oder an einem Innenspiegel im Innenraum des betreffenden Kraftfahrzeugs befestigt und positioniert werden.

Der Begriff "verformbarer Stützbügel" umfasst im Folgenden jeglichen Stützbügel, der in individueller Weise dreidimensional verformt werden kann und der in befestigter Lage an der Trägerplatte dazu dient, die erfindungsgemäße Halterungsvorrichtung auch auf einer gewölbten und/oder geneigten Aufstellfläche in einem individuell wählbaren Neigungswinkel so zu fixieren, dass sowohl der zumindest eine Stützbügel in seiner individuell verformten Lage, als auch die damit verbundene Halterungsvorrichtung in ihrer Aufstellposition jeweils verharren.

Als möglicher Bereich eines wählbaren Neigungswinkels der Halterungsvorrichtung können Neigungswinkel beispielsweise von 20° bis 80°, vorzugsweise von 30° bis 70°, besonders bevorzugt von 40° bis 60°, jeweils in Bezug zu einer horizontalen Referenzfläche angegeben werden. Für den Fall, dass die jeweilige Aufstellfläche für sich geneigt und/oder gewölbt ist, wie dies beispielsweise bei einem Armaturenbrett eines Kraftfahrzeugs meist der Fall ist, ist die jeweilige Neigung und/oder Wölbung des Armaturenbretts entsprechend zusätzlich zu berücksichtigen und erforderlichenfalls vom vorgenannten Bereich des auswählbaren Neigungswinkels der Halterungsvorrichtung in Abzug zu bringen. Mit der erfindungsgemäßen Halterungsvorrichtung ist es somit möglich, den jeweiligen Neigungswinkel der Halterungsvorrichtung individuell an die jeweilige Aufstellposition anzupassen. Der jeweilige Neigungswinkel kann individuell und unabhängig von den Gegebenheiten des jeweiligen Aufstellortes, beispielsweise unabhängig von der Neigung einer Windschutzscheibe eines Kraftfahrzeugs, ausgewählt bzw. eingestellt werden.

Das zumindest eine Befestigungsmittel ist in zweckmäßiger Weise so an der Trägerplatte positioniert, dass der daran befestigte zumindest eine Stützbügel gegebenenfalls nach einer entsprechenden Verformung eine umfallsichere und stabile Aufstellposition der Halterungsvorrichtung gewährleistet.

Weitere vorteilhafte Ausführungsformen der Erfindung werden in der Beschreibung sowie in den abhängigen Ansprüchen dargelegt. Ferner dienen die im Folgenden verwendeten Positionsangaben von Bauteilen oder Komponenten einer erfindungsgemäßen Halterungsvorrichtung oder eines erfindungsgemäßen Anzeigesystems, wie beispielsweise die Begriffe "oben", "unten", "oberhalb", "unterhalb", "vorne", "hinten", "seitlich", "innerhalb", "außerhalb", "in axialer Richtung", "in radialer Richtung" und dergleichen, im Wesentlichen dem besseren Verständnis der Erfindung, insbesondere in Verbindung mit den nachfolgenden Zeichnungen. Die verwendeten Positionsangaben können sich möglicherweise auf bestimmte Positionen Bauteilen oder Komponenten im Einsatz einer erfindungsgemäßen Halterungsvorrichtung oder auf einzelne Ansichten in den Figuren beziehen. In jedem Fall sind solche Positionsangaben dem Fachmann geläufig.

In einer besonders vorteilhaften Ausführung der Erfindung kann bei einer Halterungsvorrichtung das zumindest eine Befestigungsmittel eine Befestigungsschlaufe oder eine Befestigungsklemme zum Einstecken oder Einklemmen eines Abschnitts des zumindest einen Stützbügels aufweisen.

In dieser Ausführung kann der zumindest eine Stützbügel in besonders komfortabler Weise an dem zumindest einen Befestigungsmittel eingesteckt oder eingeklemmt werden. Erforderlichenfalls ist es dabei möglich, den zumindest einen Stützbügel auch wieder von dem zumindest einen Befestigungsmittel und damit von der Halterungsvorrichtung abzunehmen. Ebenso ist es im Rahmen der Erfindung denkbar, eine Halterungsvorrichtung mit einem Set von mehreren, unterschiedlich geformten Stützbügeln bereitzustellen, die bedarfsweise an der Trägerplatte angesteckt oder angeklemmt werden können.

Beispielsweise kann das zumindest eine Befestigungsmittel in Form einer Befestigungsschlaufe oder einer Befestigungsklemme an der Trägerplatte mit einer lösbaren Verbindung wie einer Schraubverbindung befestigt sein. Ebenso kann das zumindest eine Befestigungsmittel in Form einer Befestigungsschlaufe oder einer Befestigungsklemme an der Trägerplatte beispielsweise nicht lösbar mit einer Klebeverbindung oder einer Nietverbindung befestigt sein.

Definitionsgemäß werden unter dem Begriff "Befestigungsschlaufe" sowohl eine geschlossene Schlaufe, vergleichbar mit einer Befestigungsöse, als auch eine für sich betrachtet offene Schlaufe, vergleichbar mit einem Bügel, verstanden. Eine Befestigungsschlaufe kann demnach so gestaltet sein, dass der zumindest eine Stützbügel durch die Befestigungsschlaufe hindurch gefädelt werden kann. Ebenso kann eine Befestigungsschlaufe so gestaltet sein, dass der zumindest eine Stützbügel in die Befestigungsschlaufe, gegebenenfalls unter Bildung eines Presssitzes, eingesteckt oder eingedrückt werden kann. Beispielsweise kann ein Randabschnitt des Stützbügels mit einer Presskraft in eine Befestigungsschlaufe eingesteckt werden.

Definitionsgemäß kann eine "Befestigungsklemme" so gestaltet sein, dass zwei einander gegenüberliegende Klemmbügel, die vorzugsweise elastisch verformbar sind, und die an ihren freien Enden nicht miteinander verbunden sind, einen Klemmsitz zum Einklemmen oder Einstecken eines Abschnitts des Stützbügels bilden. In dieser Ausführung kann der zumindest eine Stützbügel beispielsweise an einer oder an mehreren Befestigungsklemmen formschlüssig angeklemmt oder eingeschnappt werden.

In zweckmäßiger Weise können solche Klemm- oder Steckverbindungen gegebenenfalls auch mehrfach beschädigungsfrei verbunden und erforderlichenfalls wieder gelöst werden.

Um den zumindest einen Stützbügel, der in seiner befestigten Lage an dem zumindest einen Befestigungsmittel eingesteckt oder eingeklemmt ist, verdrehsicher und/oder verrutschsicher in Bezug zum jeweiligen Befestigungsmittel zu befestigen, kann es zweckmäßig sein, wenn der betreffende Stützbügel zusätzlich mittels einer Schraubverbindung gesichert ist. Beispielsweise kann eine solche Schraubverbindung bzw. Schraubsicherung mit einer Befestigungsschlaufe oder Befestigungsklemme zusammenwirken oder Bestandteil einer solchen Befestigungsschlaufe oder Befestigungsklemme sein. So ist es beispielsweise möglich, dass eine Befestigungsschlaufe zum Einfädeln oder Einstecken eines Stützbügels eine Schraubsicherung aufweist, wobei erforderlichenfalls durch Einschrauben einer Sicherungsschraube eine Klemmung des eingesteckten Stützbügels innerhalb der Befestigungsschlaufe ermöglicht wird. Der in der Befestigungsschlaufe eingesteckte Abschnitt des Stützbügels kann in dieser befestigten und verklemmten Lage nicht mehr in Bezug zur Befestigungsschlaufe verdreht oder verschoben werden. Zur Entnahme des Stützbügels aus der Befestigungsschlaufe muss in diesem Fall zuerst die Sicherungsschraube bzw. die damit einhergehende Schaubsicherung gelöst werden.

Ebenso kann eine Befestigungsklemme eine entsprechende Schraubsicherung aufweisen, um ein unerwünschtes Verdrehen oder Verschieben des eingeklemmten Stützbügels zu vermeiden.

Um eine besonders einfach handzuhabende Halterungsvorrichtung gemäß der Erfindung bereitzustellen kann es zweckmäßig sein, wenn das zumindest eine Befestigungsmittel einstückig mit der Trägerplatte ausgebildet ist.

In dieser Ausführung kann die Trägerplatte beispielsweise samt dem zumindest einen Befestigungsmittel als ein gemeinsamer Spritzgussteil hergestellt sein. In vorteilhafter Weise weist eine solche Halterungsvorrichtung möglichst wenige Einzelteile auf, da das zumindest eine oder die zwei oder mehreren Befestigungsmittel an der Trägerplatte einstückig bzw. einteilig und somit verliersicher befestigt sind.

In einer weiteren vorteilhaften Ausführungsform der Erfindung kann bei einer Halterungsvorrichtung das zumindest eine Befestigungsmittel ortsfest in einer Befestigungsmittelausnehmung der Trägerplatte einsteckbar sein.

Diese Ausführungsvariante bietet den Vorteil, dass das zumindest eine Befestigungsmittel lösbar in der Trägerplatte eingesteckt werden kann. Je nach Gestaltung des Befestigungsmittels kann eine dazu korrespondierende Befestigungsmittelausnehmung in der Trägerplatte beispielsweise so geformt sein, dass das betreffende Befestigungsmittel darin formschlüssig einsteckbar ist.

In einer zweckmäßigen Weiterbildung der Erfindung kann bei einer Halterungsvorrichtung das zumindest eine Befestigungsmittel eine Befestigungsschelle mit einer Befestigungsplatte sowie mit einer damit verbundenen Befestigungsschlaufe oder Befestigungsklemme sein, wobei die Befestigungsschelle so geformt ist, dass in eingesteckter Lage in einer Befestigungsmittelausnehmung der Trägerplatte die Befestigungsplatte zumindest abschnittsweise an einer Vorderseite der Trägerplatte anliegt. Dabei ragt die Befestigungsschlaufe oder Befestigungsklemme zum Einstecken eines Abschnitts des zumindest einen Stützbügels von einer der Vorderseite gegenüberliegenden Rückseite der Trägerplatte ab.

In dieser Ausführungsvariante dienen eine oder mehrere Befestigungsschellen als Befestigungsmittel zur Befestigung des zumindest einen verformbaren Stützbügels an der Trägerplatte. Wie nachfolgend im Detail auch in Verbindung mit den gezeigten Figuren beschrieben wird, können unterschiedliche Ausführungen von Befestigungsschellen als solche Befestigungsmittel dienen.

Beispielsweise kann eine einstückige Rohrschelle eine solche Befestigungsschelle mit einer Befestigungsplatte sowie mit einer damit verbundenen Befestigungsschlaufe bilden. Ein schlaufenförmig gebogener Mittelteil der Rohrschelle bildet dabei in eingesteckter Lage in einer Befestigungsmittelausnehmung der Trägerplatte im Zusammenwirken mit dieser Trägerplatte eine Befestigungsöse. Die beiden jeweils seitlich an den gebogenen Mittelteil der Rohrschelle angrenzenden Abschnitte bilden jeweils Befestigungsplatten, die in Einbaulage an der Trägerplatte anliegen. In Einbaulage liegen die beiden Befestigungsplatten zumindest abschnittsweise an der Vorderseite der Trägerplatte an, wobei die Befestigungsschlaufe zum Einstecken eines Abschnitts eines Stützbügels von einer der Vorderseite gegenüberliegenden Rückseite der Trägerplatte abragt.

Beispielsweise kann eine einstückige Befestigungsöse mit angearbeiteter Befestigungsplatte eine solche Befestigungsschelle mit einer Befestigungsplatte sowie mit einer damit verbundenen Befestigungsschlaufe bilden. Wie bereits eingangs erwähnt wird eine Befestigungsöse mit einer geschlossenen Bügel- oder Ring-förmigen Öse ebenfalls als "Befestigungsschlaufe" gemäß der Erfindung verstanden.

Beispielsweise kann eine ein- oder mehrteilige Befestigungsklemme, die auch als Klemmschelle bezeichnet wird, samt einer damit verbundenen Befestigungsplatte ebenfalls ein geeignetes Befestigungsmittel in Form einer Befestigungsschelle bilden. Je nach Ausführung kann die Befestigungsplatte entweder einstückig mit der Klemmschelle verbunden sein oder ein separates Bauteil bilden, das mit der Klemmschelle verbunden ist.

Um eine besonders robuste Verankerung des zumindest einen Stützbügels an der Halterungsvorrichtung zu gewährleisten, können in einer Ausführungsform der Erfindung zumindest zwei, vorzugsweise drei Befestigungsmittel zum Befestigen des zumindest einen Stützbügels an der Trägerplatte vorgesehen sein.

Je nach Ausführung können die zumindest zwei oder mehreren Befestigungsmittel jeweils einstückig mit der Trägerplatte ausgebildet sein.

Alternativ können die zumindest zwei oder mehreren Befestigungsmittel jeweils Befestigungsschellen mit einer Befestigungsplatte sowie mit einer damit verbundenen Befestigungsschlaufe oder Befestigungsklemme sein, wobei die Befestigungsschellen jeweils so geformt sind, dass diese jeweils in eine Befestigungsmittelausnehmung der Trägerplatte einsteckbar sind. In eingesteckter Lage liegt dabei die jeweilige Befestigungsplatte zumindest abschnittsweise an einer Vorderseite der Trägerplatte an, wobei die Befestigungsschlaufe oder Befestigungsklemme zum Einstecken eines Abschnitts des zumindest einen Stützbügels von einer der Vorderseite gegenüberliegenden Rückseite der Trägerplatte abragt.

Die zwei oder mehreren Befestigungsmittel können beispielsweise nebeneinander an der Trägerplatte angeordnet sein, und zwar so, dass die Befestigungsschlaufen oder Befestigungsklemmen jeweils fluchtend zueinander positioniert sind, um einen Stützbügel daran anstecken oder anklemmen zu können.

In vorteilhafter Weise kann ein Stützbügel, der an zwei oder mehreren Befestigungsmitteln, beispielsweise Befestigungsschlaufen oder Befestigungsklemmen, eingesteckt oder eingeklemmt ist, durch geeignetes Verformen in Bezug zu den Befestigungsmitteln in seiner befestigten Lage so verklemmt und fixiert werden, dass der betreffende Stützbügel nicht verdreht oder verschoben werden kann. Gegebenenfalls kann bei einer solchen Montage des Stützbügels an zwei oder mehreren Befestigungsmitteln eine zusätzliche Schraubsicherung zum Fixieren des Stützbügels damit überflüssig sein.

Um die Handhabung weiter zu erleichtern, kann es vorteilhaft sein, wenn bei einer erfindungsgemäßen Halterungsvorrichtung ein einziger verformbarer Stützbügel vorgesehen ist, wobei in befestigter Lage des Stützbügels an der Trägerplatte ein erster Endabschnitt des Stützbügels ein erstes verformbares Stützbein bildet sowie ein dem ersten Endabschnitt gegenüberliegender zweiter Endabschnitt des Stützbügels ein zweites verformbares Stützbein bildet, und wobei das erste Stützbein und das zweite Stützbein jeweils unabhängig voneinander einstellbar sind.

Es kann vorteilhaft sein, wenn ein einziger verformbarer Stützbügel eine ausreichende Bügellänge aufweist, um in befestigter Lage mit seinen beiden Endabschnitten jeweils ein verformbares Stützbein zu bilden, das einen umfallsicheren Stand der Halterungsvorrichtung gewährleistet. Der einzige verformbare Stützbügel wird vorzugsweise etwa mittig seiner Bügellänge an der Trägerplatte befestigt, damit die beiden Endabschnitte jeweils zwei etwa gleich lange Stützbeine bilden können.

In einer weiteren vorteilhaften Ausführungsform der Erfindung können bei einer Halterungsvorrichtung ein erster verformbarer Stützbügel sowie ein weiterer, zweiter verformbarer Stützbügel vorgesehen sein, wobei jeweils in befestigter Lage der erste verformbare Stützbügel ein erstes verformbares Stützbein und der zweite verformbare Stützbügel ein zweites verformbares Stützbein bildet, und wobei das erste Stützbein und das zweite Stützbein jeweils unabhängig voneinander einstellbar sind.

In dieser Ausführungsform können der erste verformbare Stützbügel und der separate zweite verformbare Stützbügel wahlweise aus demselben Material oder aus unterschiedlichen Materialien hergestellt sein. Beispielsweise kann der erste verformbare Stützbügel eine größere Bügellänge als der zweite verformbare Stützbügel aufweisen, um die Aufstellung der Halterungsvorrichtung auf einer gewölbten und/oder geneigten Aufstellfläche wie beispielsweise auf einem Armaturenbrett zu erleichtern.

Besonders vorteilhaft kann es sein, wenn der zumindest eine Stützbügel oder die zwei Stützbügel jeweils mit einem weichen, elastischen Schlauchüberzug ummantelt ist bzw. sind. Ebenso kann es vorteilhaft sein, wenn der oder die Stützbügel jeweils eine Endkappe aus einem weichen, rutschfesten Material, beispielsweise aus Gummi oder Silikon, aufweist bzw. aufweisen. In vorteilhafter Weise kann auch ein umlaufender Rand der Trägerplatte einen geeigneten Kantenschutz aus einem weichen, elastischen Material, beispielsweise aus Silikon, aufweisen. Damit wird einerseits eine rutschfeste Aufstellung der Halterungsvorrichtung am jeweiligen Aufstellungsort gewährleistet und andererseits können damit Kratzer oder andere Beschädigungen der jeweiligen Aufstellfläche vermieden werden. Dies ist insbesondere bei der Aufstellung einer Halterungsvorrichtung auf empfindlichen Materialien, beispielsweise auf einem mit Leder oder Stoff überzogenen Armaturenbrett eines Kraftfahrzeuges, wichtig.

Um in besonders einfacher Weise eine robuste Befestigung einer Display-Anzeige an der erfindungsgemäßen Halterungsvorrichtung zu gewährleisten, kann bei der Halterungsvorrichtung die Trägerplatte mehrere, vorzugsweise vier, Durchgangsbohrungen für Schrauben zum Befestigen einer Display-Anzeige sowie vorzugsweise zumindest eine Geräteausnehmung zur Aufnahme eines Gehäuseabschnitts einer Display-Anzeige aufweisen.

Der Einsatz von lösbaren Schraubverbindungen bietet den Vorteil, dass die Display-Anzeige rasch und sicher an der Trägerplatte befestigt und erforderlichenfalls auch wieder von dieser abgenommen werden kann.

Je nach Bauweise einer zu befestigenden Display-Anzeige können optional eine oder mehrere Geräteausnehmungen in der Trägerplatte dazu dienen, um die Display-Anzeige in besonders kompakter Weise möglichst bündig an der Trägerplatte befestigen zu können. Solche Geräteausnehmungen in der Trägerplatte können beispielsweise dazu dienen, den Zugang zu einem Schalter oder Stecker an der Geräterückseite der Display-Anzeige zu ermöglichen. Ebenso können Geräteausnehmungen in der Trägerplatte dazu dienen, dass beispielsweise ein Gehäuseabschnitt an der Rückseite der Display-Anzeige wie beispielsweise ein Batteriefach mit größerer Bautiefe in Einbaulage in die Geräteausnehmung der Trägerplatte eintauchen kann.

Um eine besonders flexible Anpassung der erfindungsgemäßen Halterungsvorrichtung an die Gegebenheiten des jeweiligen Aufstellorts zu ermöglichen, kann bei der Halterungsvorrichtung der zumindest eine verformbare Stützbügel ein Schwanenhals-Bügel sein, wobei der Schwanenhals-Bügel eine innere Spirale aus einem schraubenförmig gewendelten Runddraht sowie eine um die innere Spirale herumgewickelte äußere Spirale aus einem Dreikantdraht umfasst, wobei Spitzen des Dreikantdrahts der äußeren Spirale jeweils zwischen Runddrahtabschnitte der inneren Spirale eingedrückt sind, und wobei der Schwanenhals-Bügel vorzugsweise einen Schlauchüberzug aus einem elastischen Kunststoff, insbesondere aus Silikonelastomer, aufweist.

Ein sogenannter "Schwanenhals"-Bügel als Kombination aus einem inneren Runddraht mit einer von außen eingedrückten Dreikantwendel ergibt ein biegesteifes, flexibel dreidimensional verformbares Verbindungselement aus einem gewendelten Metallschlauch. Ein solcher Schwanenhals-Bügel kann unter Beachtung eines Mindestbiegeradius, der nicht unterschritten werden darf, in beinahe jede dreidimensionale Raumrichtung gebogen werden und verharrt im jeweils verformten Zustand dabei in der entsprechend gebogenen Stellung.

Um Kratzer und Beschädigungen beim Hantieren des Metallschlauchs des Schwanenhals-Bügels zu vermeiden, ist dieser vorzugsweise mit einem weichen Schlauchüberzug aus einem elastischen Kunststoff, insbesondere aus Silikonelastomer, geschützt.

Die erfindungsgemäße Halterungsvorrichtung kann sowohl mit einer Display-Anzeige verwendet werden, die an einer Vorderseite der Trägerplatte befestigt werden kann. Ebenso kann die Trägerplatte der erfindungsgemäßen Halterungsvorrichtung auch als "analoge" Anzeigenfläche dienen, auf der beispielsweise Produkt- oder Werbeinformationen aufgedruckt oder aufgeklebt sind. Derartige Informationen können wahlweise direkt auf der Trägerplatte aufgebracht sein oder in indirekter Weise beispielsweise auf einem Papier oder einer Folie als Trägermaterial aufgebracht sein, wobei das entsprechende Trägermaterial auf der Vorderseite der Trägerplatte befestigt ist.

Die eingangs genannte erfindungsgemäße Aufgabe wird auch von einem Anzeigesystem gelöst, welches Anzeigesystem eine erfindungsgemäße Halterungsvorrichtung sowie eine Display-Anzeige umfasst, wobei die Display-Anzeige an einer Vorderseite der Trägerplatte lösbar befestigbar ist.

Bei einem solchen Anzeigesystem ist zumindest eine Display-Anzeige in befestigter Lage formschön an der Vorderseite der Trägerplatte befestigt. Der zumindest eine Stützbügel ist an der Rückseite der Trägerplatte befestigt.

Je nach Ausführungsvariante kann die Display-Anzeige beispielsweise so positioniert sein, dass die Trägerplatte die daran befestigte Display-Anzeige allseitig überragt und die Trägerplatte einen effektvollen Rahmen für die Display-Anzeige bildet, der beispielsweise mit einer Werbeaufschrift, einem Logo, und dergleichen gestaltet sein kann. Ebenso kann die Trägerplatte so dimensioniert sein, dass diese im Wesentlichen flächenbündig mit der Display-Anzeige abschließt. Alternativ dazu kann die Display-Anzeige nur an einem Flächenabschnitt der Vorderseite einer flächenmäßig größeren Trägerplatte angeordnet sein. Außerdem kann ein Anzeigesystem auch mehr als eine Display-Anzeige umfassen. So können beispielsweise auch zwei oder mehrere Display-Anzeigen an der Vorderseite der Trägerplatte befestigt sein.

Besonders praktisch und zuverlässig lässt sich die Montage und gegebenenfalls auch die Demontage der Display-Anzeige an der Halterungsvorrichtung bewerkstelligen, wenn ein erfindungsgemäßes Anzeigesystem bereitgestellt wird, bei dem die Display-Anzeige mit Befestigungsschrauben an der Vorderseite der Trägerplatte angeschraubt ist.

Beispielsweise können Rändelschrauben gegebenenfalls unter Verwendung von Beilagscheiben zur Befestigung der entsprechenden Display-Anzeige an der Vorderseite der Trägerplatte dienen. Rändelschrauben bieten den Vorteil, auch ohne Werkzeug von Hand festgeschraubt bzw. gelockert werden zu können. Die Befestigungsschrauben werden von der Rückseite der Trägerplatte ausgehend durch entsprechende Durchgangsbohrungen der Trägerplatte hindurch in die Rückseite des Gehäuses der Display-Anzeige eingeschraubt.

In besonders flexibler Weise kann ein erfindungsgemäßes Anzeigesystem eingesetzt werden, bei dem durch Verformung des zumindest einen verformbaren Stützbeins ein Neigungswinkel der Trägerplatte sowie damit einhergehend eine Neigung eines Bildschirms der Display-Anzeige in Bezug zu einer Aufstellfläche wählbar sind.

Das Anzeigesystem kann in besonders flexibler Weise auf unterschiedlichsten Aufstellflächen selbststehend sowie umfallsicher aufgestellt werden, und zwar jeweils so, dass die Trägerplatte in einem wählbaren Neigungswinkel in Bezug zur jeweiligen Aufstellfläche aufgestellt werden kann. Damit einhergehend kann auch die Neigung bzw. der Neigungswinkel des Bildschirms der Display-Anzeige, die an der Trägerplatte befestigt ist, in Bezug zur jeweiligen Aufstellfläche gewählt werden.

Als mögliche Aufstellflächen für ein erfindungsgemäßes Anzeigesystem können beispielsweise geneigte und/oder gewölbte Flächen wie beispielsweise ein Armaturenbrett eines Kraftfahrzeugs dienen.

Als möglicher Bereich eines wählbaren Neigungswinkels des Anzeigesystems können Neigungswinkel beispielsweise von 20° bis 80°, vorzugsweise von 30° bis 70°, besonders bevorzugt von 40° bis 60°, jeweils in Bezug zu einer horizontalen Referenzfläche bzw. Aufstellfläche angegeben werden. Für den Fall, dass die jeweilige Aufstellfläche für sich geneigt und/oder gewölbt ist, wie dies beispielsweise bei einem Armaturenbrett eines Kraftfahrzeugs meist der Fall ist, ist der jeweilige Neigungswinkel und/oder Wölbungswinkel des Armaturenbretts entsprechend zusätzlich zu berücksichtigen und erforderlichenfalls vom vorgenannten Bereich des auswählbaren Neigungswinkels des Anzeigesystems in Abzug zu bringen. Weiters ist für eine sichere Aufstellung des Anzeigesystems zu beachten, dass die Display-Anzeige mit möglichst tiefliegendem Schwerpunkt an der Trägerplatte befestigt ist. Mit dem erfindungsgemäßen Anzeigesystem ist es somit möglich, den jeweiligen Neigungswinkel der Display-Anzeige individuell an die jeweilige Aufstellposition anzupassen. Der jeweilige Neigungswinkel kann individuell und unabhängig von den Gegebenheiten des jeweiligen Aufstellortes, beispielsweise unabhängig von der Neigung einer Windschutzscheibe eines Kraftfahrzeugs, ausgewählt bzw. eingestellt werden.

Um die Standsicherheit eines erfindungsgemäßen Anzeigesystems am jeweiligen Aufstellort zu erhöhen, kann in befestigter Lage der Display-Anzeige an der Trägerplatte ein Gehäuseabschnitt, vorzugsweise ein Batteriefach, der Display-Anzeige in eine Geräteausnehmung der Trägerplatte eintauchen.

In dieser Ausführungsform kann durch Eintauchen oder Einstecken eines schweren Gehäuseabschnitts wie eines Batteriefachs der Display-Anzeige in eine Geräteausnehmung der Trägerplatte der Schwerpunkt des Anzeigesystems in seiner individuellen Aufstellposition möglichst tief eingestellt werden, um eine umfallsichere Aufstellung des Anzeigesystems zu ermöglichen.

Im Rahmen der Erfindung kann ein erfindungsgemäßes Anzeigesystem zur Positionierung im Innenraum eines Kraftfahrzeugs, vorzugsweise zur Aufstellung auf einem Armaturenbrett nahe an einer Windschutzscheibe, verwendet werden, wobei erforderlichenfalls ein Neigungswinkel der Trägerplatte sowie eine Neigung eines Bildschirms der Display-Anzeige in Bezug zu einer Aufstellfläche, vorzugsweise in Bezug zu einer Neigung und/oder Krümmung des Armaturenbretts, wählbar sind.

Wie bereits zuvor erwähnt können als Aufstellflächen im Innenraum eines Kraftfahrzeugs beispielsweise geneigte und/oder gewölbte Flächen eines Armaturenbretts des betreffenden Kraftfahrzeugs dienen. Mit dem erfindungsgemäßen Anzeigesystem ist es möglich, den jeweiligen Neigungswinkel der Display-Anzeige individuell an die jeweilige Aufstellposition anzupassen. Der jeweilige Neigungswinkel kann individuell und unabhängig von den Gegebenheiten des jeweiligen Aufstellortes, beispielsweise unabhängig von der Neigung einer Windschutzscheibe des betreffenden Kraftfahrzeugs, ausgewählt bzw. eingestellt werden. Somit kann das erfindungsgemäße Anzeigesystem in besonders vielseitiger Weise eingesetzt und im Innenraum eines Kraftfahrzeugs positioniert werden.

Ebenso ist es im Rahmen der Erfindung vorgesehen, das erfindungsgemäße Anzeigesystem zur Positionierung an einem Innenspiegel oder an einer Sonnenblende im Innenraum eines Kraftfahrzeugs zu verwenden. Zur entsprechenden Befestigung des Anzeigesystems an zumindest einem geeigneten Halterungspunkt, beispielsweise an einem Innenspiegel oder an einer Sonnenblende im Innenraum eines Kraftfahrzeugs kann ebenfalls der zumindest eine verformbare Stützbügel dienen, der erforderlichenfalls auch als Hängebügel zur Hängehalterung des Anzeigesystems verwendet werden kann.

### KURZE BESCHREIBUNG DER FIGUREN

Die Erfindung wird nun anhand von Ausführungsbeispielen näher erläutert. Die schematischen Zeichnungen sind beispielhaft und sollen den Erfindungsgedanken darlegen. Dabei zeigen:
- **Fig. 1**: in einer isometrischen Explosionsdarstellung eine erste Ausführungsform einer Halterungsvorrichtung gemäß der Erfindung;
- **Fig. 2**: in einer isometrischen Explosionsdarstellung eine zweite Ausführungsform einer Halterungsvorrichtung gemäß der Erfindung;
- **Fig. 3**: in einer isometrischen Explosionsdarstellung eine Ausführungsform eines erfindungsgemäßen Anzeigesystems mit einer Halterungsvorrichtung und mit einer Display-Anzeige;
- **Fig. 4**: in einer Frontalansicht eine Trägerplatte einer erfindungsgemäßen Halterungsvorrichtung;
- **Fig. 5A**: in einer teilweisen Schnittansicht von der Seite eine Befestigungsschlaufe als Befestigungsmittel, das in einer Trägerplatte einer erfindungsgemäßen Halterungsvorrichtung eingesteckt ist;
- **Fig. 5B**: in einer teilweisen Schnittansicht von der Seite eine Befestigungsklemme als Befestigungsmittel, das in einer Trägerplatte einer erfindungsgemäßen Halterungsvorrichtung eingesteckt ist;
- **Fig. 6A**: in einer Draufsicht die in Fig. 5A gezeigte Befestigungsschlaufe;
- **Fig. 6B**: in einer Draufsicht die in Fig. 5B gezeigte Befestigungsklemme;
- **Fig. 7**: in einer Seitenansicht ein verformbarer Stützbügel einer erfindungsgemäßen Halterungsvorrichtung;
- **Fig. 8**: in einer isometrischen Ansicht ein Detail einer erfindungsgemäßen Halterungsvorrichtung mit einer daran befestigten Display-Anzeige;
- **Fig. 9A**: in einer Frontalansicht eine Vorderseite einer Display-Anzeige;
- **Fig. 9B**: die in Fig. 9A dargestellte Display-Anzeige in einer Seitenansicht;
- **Fig. 10**: in einer isometrischen Ansicht von der Seite ein erfindungsgemäßes Anzeigesystem in einer Aufstellposition auf einem Armaturenbrett eines Kraftfahrzeugs.

### FUNKTIONSWEISE DER ERFINDUNG

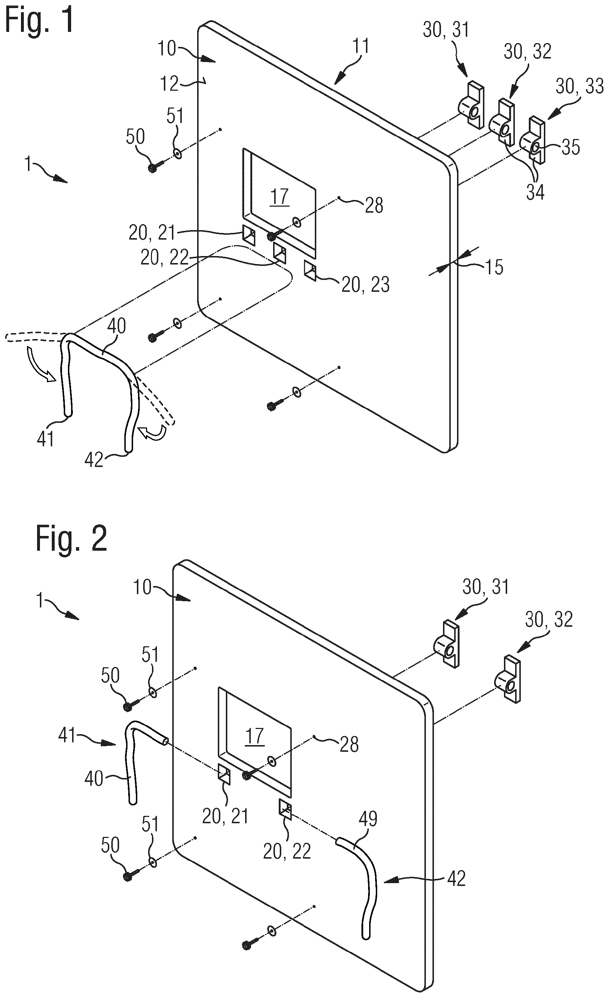

Die nun folgende Figurenbeschreibung bezieht sich gleichermaßen auf die Figuren 1 bis 4. Für gleiche oder funktionsgleiche Bauteile und Komponenten unterschiedlicher Ausführungsformen werden jeweils dieselben Bezugszeichen verwendet.

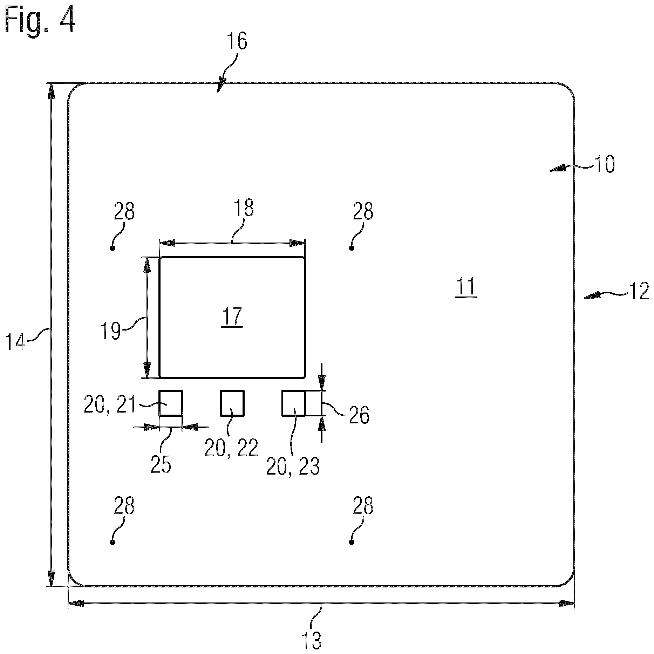

Fig. 1 zeigt eine erste Ausführungsform einer erfindungsgemäßen Halterungsvorrichtung 1 mit einer Trägerplatte 10. Die Trägerplatte 10 weist eine Vorderseite 11 sowie eine der Vorderseite 11 gegenüberliegende Rückseite 12 auf. Wie anhand der in Fig. 4 veranschaulichten Trägerplatte 10 bezeichnet weist die Trägerplatte 10 weiters eine Länge 13, eine Breite 14, sowie eine Plattendicke 15 auf. Ein umlaufender Rand 16 der Trägerplatte 10 ist beispielsweise mit einem Kantenschutzprofil aus Silikon ausgerüstet.

Die in Fig. 1 gezeigte Trägerplatte 10 ist beispielsweise aus einer PVC Hartschaumplatte hergestellt und beispielsweise quadratisch gestaltet, wobei eine Länge 13 und eine Breite 14 der Trägerplatte 10 gleich groß sind. Die Trägerplatte 10 weist eine Geräteausnehmung 17 mit einer Länge 18 sowie mit einer Breite 19 auf. Die in Fig. 1 gezeigte Trägerplatte 10 weist überdies drei Befestigungsmittelausnehmungen 20 auf, die nebeneinander angeordnet sind, und zwar eine erste Schellenausnehmung 21, eine zweite Schellenausnehmung 22 sowie eine dritte Schellenausnehmung 23. Jede dieser Schellenausnehmungen 21,22,23 weist eine Länge 25 sowie eine Breite 26 auf.

Außerdem hat die gezeigte Trägerplatte 10 vier Durchgangsbohrungen 28 für entsprechende Befestigungsschrauben.

Die drei Befestigungsmittelausnehmungen 20 bzw. Schellenausnehmungen 21,22,23 dienen dazu, in zusammengebauter Lage jeweils ein Befestigungsmittel 30 ortsfest in der Trägerplatte 10 einzustecken. Als Befestigungsmittel 30 dienen hier beispielsweise Befestigungsschellen. Eine erste Befestigungsschelle 31 wird dazu in die erste Schellenausnehmung 21, eine zweite Befestigungsschelle 32 in die zweite Schellenausnehmung 22 sowie eine dritte Befestigungsschelle 33 in die dritte Schellenausnehmung 23 eingesteckt.

Die in Fig. 1 gezeigten Befestigungsmittel 30 bzw. Befestigungsschellen 31,32,33 weisen jeweils eine Befestigungsplatte 34 mit einer damit verbundenen Befestigungsschlaufe 35 auf. Die Befestigungsschellen 31,32,33 sind jeweils so geformt, dass in eingesteckter Lage in einer Befestigungsmittelausnehmung 20 der Trägerplatte 10 jeweils die Befestigungsplatte 34 zumindest abschnittsweise an einer Vorderseite 11 der Trägerplatte 10 anliegt, wobei die Befestigungsschlaufe 35 zum Einstecken eines Abschnitts eines verformbaren Stützbügels 40 von einer der Vorderseite 11 gegenüberliegenden Rückseite 12 der Trägerplatte 10 abragt.

In Fig. 1 ist dazu ein einziger verformbarer Stützbügel 40 gezeigt, der beispielsweise ein Schwanenhals-Bügel ist. Ein erster Endabschnitt des Stützbügels 40 bildet in befestigter Lage des Stützbügels 40 an der Trägerplatte 10 ein erstes Stützbein 41. Ein dem ersten Endabschnitt gegenüberliegender zweiter Endabschnitt des befestigten Stützbügels 40 bildet ein zweites Stützbein 42. Die beiden Stützbeine 41,42 sind in befestigter Lage des Stützbügels 40 an der Trägerplatte 10 jeweils unabhängig voneinander einstellbar. Dies wird durch die beiden Pfeile symbolisiert, die eine mögliche Verformung der beiden Endabschnitte des Stützbügels 40 ausgehend von einer strichliert skizzierten Ausgangslage zeigen.

Zum Befestigen des Stützbügels 40 an der Trägerplatte 10 werden zuerst die drei Befestigungsmittel 30 bzw. Befestigungsschellen 31,32,33 in die jeweiligen Schellenausnehmungen 21,22,23 der Trägerplatte 10 eingesteckt, und zwar so, dass die Befestigungsschlaufen 35 zum Einstecken eines Abschnitts eines verformbaren Stützbügels 40 jeweils von der Rückseite 12 der Trägerplatte 10 abragen bzw. abstehen. Durch entsprechendes Einführen des Stützbügels 40 in seitlicher Richtung in die drei Befestigungsschlaufen 35 wird der Stützbügel 40 vorzugsweise etwa mittig seiner Bügellänge 43 an der Trägerplatte 10 befestigt, damit die beiden Endabschnitte jeweils zwei etwa gleich lange Stützbeine 41,42 ausbilden.

Weiters sind in Fig. 1 entsprechende Befestigungsschrauben 50 sowie Beilagscheiben 51 skizziert, die von der Rückseite 12 der Trägerplatte 10 in die vorgesehenen Durchgangsbohrungen 28 eingeschraubt werden können.

Alternativ zu der in Fig. 1 gezeigten Ausführung können im Rahmen der vorliegenden Erfindung geeignete Befestigungsmittel 30, beispielsweise Befestigungsschlaufen 35, zum Einstecken eines verformbaren Stützbügels 40 auch einstückig bzw. einteilig mit der Trägerplatte 10 ausgebildet sein. Dies ist in den Figuren nicht explizit gezeigt.

Die in Fig. 2 gezeigte zweite Ausführungsform einer Halterungsvorrichtung 1 gemäß der Erfindung unterscheidet sich gegenüber der in Fig. 1 dargestellten Ausführung insofern, als dass die Trägerplatte 10 nur zwei Befestigungsmittelausnehmungen 20 ausweist, um hier insgesamt zwei Befestigungsmittel 30 darin einstecken zu können. Als Befestigungsmittel 30 dienen hier wiederum Befestigungsschellen 31,32 jeweils mit einer Befestigungsplatte 34 sowie einer damit verbundenen Befestigungsschlaufe 35.

Weiters unterscheidet sich die Fig. 2 gezeigte zweite Ausführungsform gegenüber der in Fig. 1 gezeigten Ausführung, als hier in Fig. 2 die Trägerplatte 10 beispielsweise aus Acrylglas hergestellt ist und zwei separate Stützbügel 40,49 vorgesehen sind. In zusammengebauter Lage der Halterungsvorrichtung 1 wird der erste Stützbügel 40 an der Befestigungsschlaufe 35 der ersten Befestigungsschelle 31 eingesteckt und bildet in befestigter Lage ein erstes Stützbein 41. Der separate zweite Stützbügel 49 wird an der Befestigungsschlaufe 35 der zweiten Befestigungsschelle 32 eingesteckt und bildet in befestigter Lage ein zweites Stützbein 42, das unabhängig vom ersten Stützbein 41 verformt werden kann.

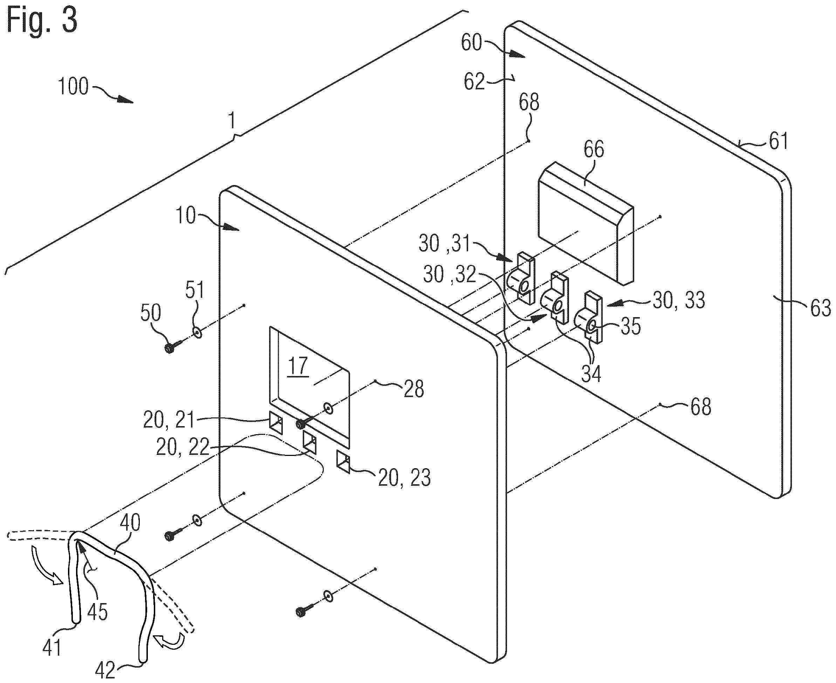

Fig. 3 zeigt in einer Explosionsdarstellung ein erfindungsgemäßes Anzeigesystem 100, welches die zuvor beschriebene Halterungsvorrichtung 1 gemäß Fig. 1 umfasst, sowie eine Display-Anzeige 60, welche an der Vorderseite 11 der Trägerplatte 1 befestigbar ist.

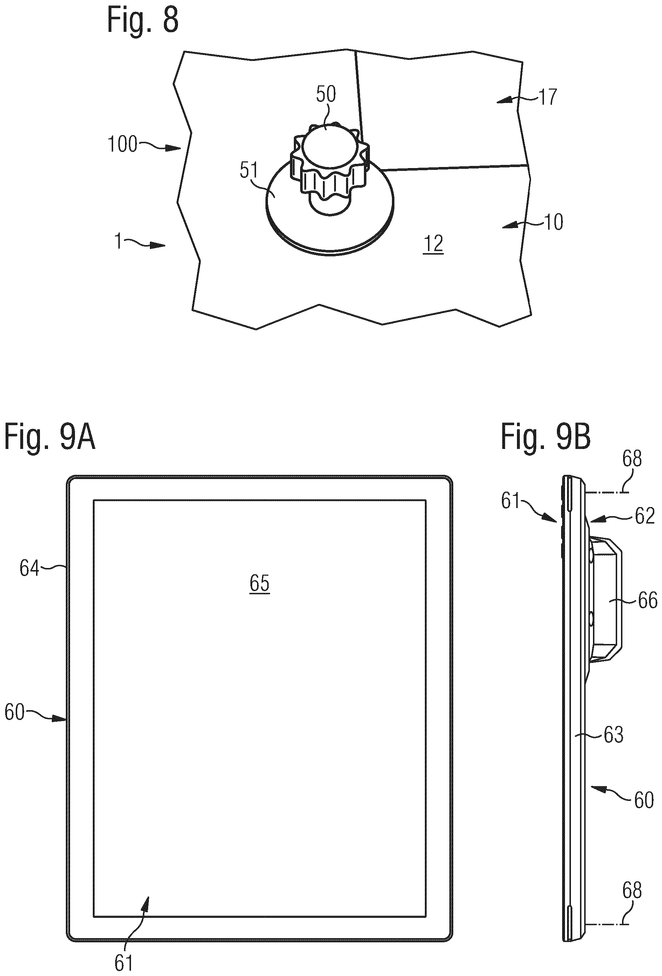

Eine solche beispielhafte Display-Anzeige 60 ist im Detail in den beiden Figuren 9A und 9B gezeigt und weist eine Vorderseite 61, eine Rückseite 62, sowie ein Gehäuse 63 mit einem Gehäuserand 64 auf. Der umlaufende Gehäuserand 64 umgibt hier einen Bildschirm 65, beispielsweise ein handelsübliches LCD-Display, das an der Vorderseite 61 angeordnet ist.

Vergleichbar mit Fig. 1 symbolisieren auch in Fig. 3 zwei Pfeile eine mögliche Verformung der beiden Endabschnitte des Stützbügels 40 ausgehend von einer strichliert skizzierten Ausgangslage.

Wie in der Seitenansicht von Fig. 9B ersichtlich ragt ein Abschnitt des Gehäuses 63 mit einem Batteriefach 66 etwas von der Rückseite 62 ab. Außerdem befinden sich an der Rückseite 62 des Gehäuses 63 Bohrungen 68 am Gehäuserand, die mit den Durchgangsbohrungen 28 der Trägerplatte 28 fluchtend korrespondieren. Zur Befestigung der Display-Anzeige 60 wird diese mittels der mehreren Befestigungsschrauben 50, die durch die Durchgangsbohrungen 28 hindurch ragen, mit der Trägerplatte 10 verschraubt. Das Batteriefach 66 an der Rückseite 62 taucht dabei in die korrespondierenden Geräteausnehmung 17 der Trägerplatte 10 ein, wodurch eine möglichst plane und formschöne Befestigung der Display-Anzeige 60 an der Halterungsvorrichtung 1 erzielt wird. Außerdem bietet die in die Geräteausnehmung 17 eingesteckte bzw. eingetauchte Befestigungslage des Batteriefachs 66 Vorteile bei der Gewichtsverteilung des Anzeigesystems 100.

Die in Fig. 4 gezeigte Trägerplatte 4 bietet an ihrer Vorderseite 11 Platz für Aufdrucke oder Aufschriften, die auch dann für einen Betrachter sichtbar bleiben, wenn an einem Flächenabschnitt der Vorderseite 11 eine Display-Anzeige 60 montiert ist. Solche Aufdrucke oder Aufschriften können wahlweise direkt auf der Trägerplatte 4 aufgebracht sein oder auf einer entsprechenden Folie oder einem Papier, welche bzw. welches auf der Vorderseite 11 der Trägerplatte 4 befestigt wird. Die Befestigungsmittelausnehmungen 20,21,22,23 sowie die Geräteausnehmung 17 sind so positioniert, dass diese von einer an der Vorderseite 11 montierten Display-Anzeige 60, die in Fig. 4 nicht dargestellt ist, abgedeckt werden. Eine Halterungsvorrichtung 1 mit der in Fig. 4 gezeigten Trägerplatte 4 kann an sich auch ohne Display-Anzeige eingesetzt werden, wobei in zweckmäßiger Weise die Ausnehmungen beispielsweise mit einer bedruckten Folie oder einem bedruckten Papier überklebt werden.

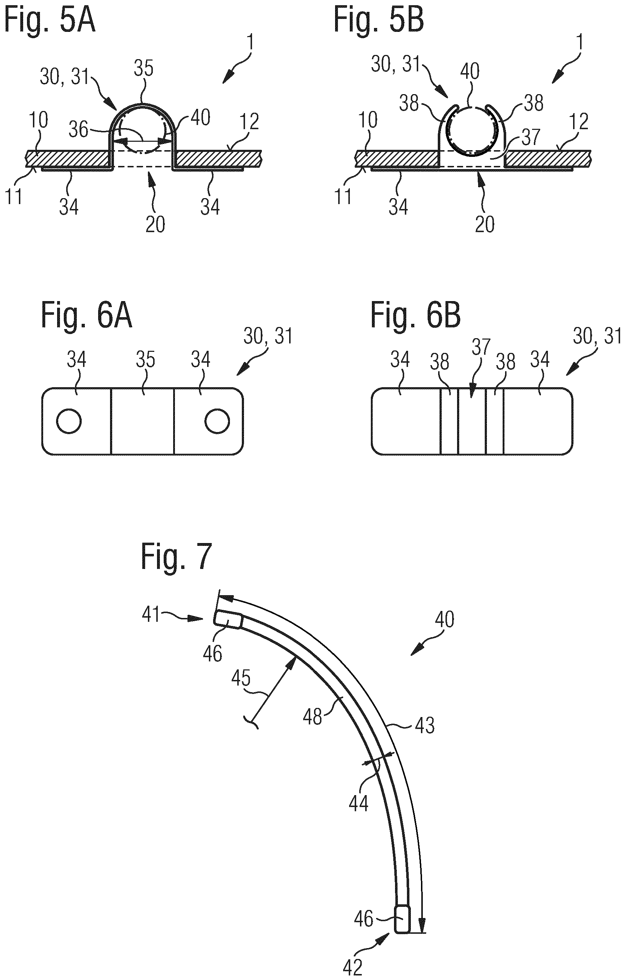

Fig. 5A zeigt in einer teilweisen Schnittansicht von der Seite als Befestigungsmittel 30 eine Befestigungsschelle 31 in Form einer einstückigen Rohrschelle. Das Befestigungsmittel 30 bzw. die Befestigungsschelle 31 ist in einer Befestigungsmittelausnehmung 20 einer Trägerplatte 10 der erfindungsgemäßen Halterungsvorrichtung 1 eingesteckt. Ein schlaufenförmig gebogener Mittelteil der gezeigten Rohrschelle ist als Befestigungsschlaufe 35 geformt und bildet in eingesteckter Lage in der Befestigungsmittelausnehmung 20 der Trägerplatte 10 im Zusammenwirken mit dieser Trägerplatte 10 eine Befestigungsöse, in die ein Abschnitt eines verformbaren Stützbügels 40 eingesteckt oder eingefädelt werden kann. Die beiden jeweils seitlich an die Befestigungsschlaufe 35, also an den gebogenen Mittelteil der Rohrschelle, angrenzenden Abschnitte bilden jeweils Befestigungsplatten 34, die in Einbaulage an der Vorderseite 11 der Trägerplatte 10 anliegen. Die Befestigungsschlaufe 35 weist eine lichte Weite 36 zum Einstecken eines Abschnitts eines Stützbügels 40 auf und ragt von einer der Vorderseite 11 gegenüberliegenden Rückseite 12 der Trägerplatte 10 ab. Die Kontur eines in der Befestigungsschlaufe 35 eingefädelten Stützbügels 40 ist in Fig. 5A mit einer strichpunktierten Linie angedeutet.

Fig. 6A zeigt in einer Draufsicht nur das in Fig. 5A gezeigte Befestigungsmittel 30 in Form einer einstückigen Rohrschelle mit einer mittigen Befestigungsschlaufe 35. Die beiden jeweils seitlich an die Befestigungsschlaufe 35, also an den gebogenen Mittelteil der Rohrschelle, angrenzenden Abschnitte bilden jeweils Befestigungsplatten 34.

Fig. 5B zeigt von der Seite aus gesehen als Befestigungsmittel 30 eine Befestigungsschelle 31 in Form einer Befestigungsklemme 37, die auch als Klemmschelle bezeichnet wird, mit einer daran befestigten Befestigungsplatte 34. Die Befestigungsplatte 34 ist in der hier gezeigten Ausführung ein separates Bauteil, das mit der Befestigungsklemme 37 umfasst zwei einander gegenüberliegende Klemmbügel 38, die elastisch verformbar sind, und die an ihren freien Enden nicht miteinander verbunden sind. Die Klemmbügel 38 sind so geformt, dass diese einen Klemmsitz zum Einklemmen oder Einstecken eines Abschnitts eines Stützbügels 40 bilden. In dieser Ausführung kann ein Abschnitt eines Stützbügels 40 in die Befestigungsklemme 37 formschlüssig angeklemmt oder eingeschnappt werden.

Vergleichbar mit Fig. 5A ist auch in Fig. 5B das Befestigungsmittel 30 in einer Befestigungsmittelausnehmung 20 einer Trägerplatte 10 der erfindungsgemäßen Halterungsvorrichtung 1 eingesteckt. Die Befestigungsklemme 37 mit den beiden Klemmbügeln 38 ist durch die Befestigungsmittelausnehmung 20 hindurch gesteckt, wobei die Klemmbügel 38 von der Rückseite 12 der Trägerplatte 10 abragen bzw. über diese Rückseite 12 vorstehen. Die beiden jeweils seitlich an die Befestigungsklemme 37 angrenzenden Abschnitte der Befestigungsplatte 34 liegen in Einbaulage an der Vorderseite 11 der Trägerplatte 10 an. Die Kontur eines in der Befestigungsklemme 37 eingesteckten Stützbügels 40 ist in Fig. 5B mit einer strichpunktierten Linie angedeutet.

Fig. 6B zeigt in einer Draufsicht nur das in Fig. 5B gezeigte Befestigungsmittel 30 in Form der Befestigungsklemme 37 sowie der damit verbundenen Befestigungsplatte 34.

Fig. 7 zeigt in einer Seitenansicht einen verformbaren Stützbügel 40 einer erfindungsgemäßen Halterungsvorrichtung. Der Stützbügel 40 ist hier als Schwanenhals-Bügel ausgeführt mit einer Länge 43 sowie mit einem Durchmesser 44. Ein solcher Schwanenhals-Bügel kann unter Beachtung eines minimalen Biegeradius 45, der nicht unterschritten werden darf, in beinahe jede dreidimensionale Raumrichtung gebogen werden und verharrt im jeweils verformten Zustand dabei in der entsprechend gebogenen Stellung. An seinen beiden freien Enden, die in Einbaulage, also in an einer Trägerplatte befestigten Lage ein erstes Stützbein 41 sowie ein zweites Stützbein 42 für die erfindungsgemäße Halterungsvorrichtung bilden können, sind jeweils Endkappen 46 aus einem weichen, elastischen Material, beispielsweise aus Silikonelastomer vorgesehen.

Um Kratzer und Beschädigungen beim Hantieren des Metallschlauchs des Schwanenhals-Bügels zu vermeiden, ist dieser hier mit einem weichen Schlauchüberzug 48 aus einem elastischen Kunststoff, insbesondere aus Silikonelastomer, geschützt.

Fig. 8 zeigt ein Detail einer erfindungsgemäßen Halterungsvorrichtung 1 mit einer daran befestigten Display-Anzeige. An der Rückseite 12 einer Trägerplatte ist eine Befestigungsschraube 50 samt einer Beilagscheibe 51 zu sehen, die in befestigter Lage in die Rückseite einer Display-Anzeige eingeschraubt ist. Als Befestigungsschraube 50 dient beispielsweise eine Rändelschraube. In zweckmäßiger Weise sind bei einem erfindungsgemäßen Anzeigesystem 100 beispielsweise vier solcher Befestigungsschrauben 50 vorgesehen, die jeweils an den Randabschnitten an der Rückseite einer Display-Anzeige eingeschraubt werden und eine sichere Befestigung der Display-Anzeige an der Halterungsvorrichtung 1 gewährleisten.

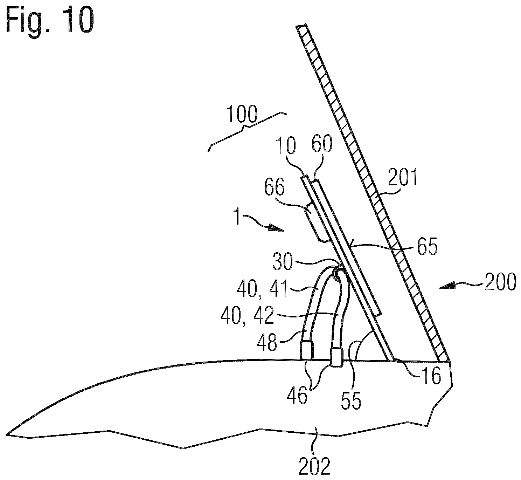

Fig. 10 zeigt in einer isometrischen Ansicht von der Seite ein erfindungsgemäßes Anzeigesystem 100 in einer Aufstellposition auf einem Armaturenbrett 202 in der Nähe einer Windschutzscheibe 201 eines Kraftfahrzeugs 200. Das Armaturenbrett 202 ist am Aufstellort des Anzeigesystems 100 beispielsweise geneigt und gewölbt und bietet keine plane, horizontale Aufstellfläche.

Die Halterungsvorrichtung 1 sowie die daran befestigte Display-Anzeige 60 sind hier in Aufstelllage in einem wählbaren Neigungswinkel 55 in Bezug zur Aufstellfläche geneigt.

Als möglicher Bereich eines wählbaren Neigungswinkels 55 der Halterungsvorrichtung 1 können beispielsweise Neigungswinkel von 20° bis 80°, vorzugsweise von 30° bis 70°, besonders bevorzugt von 40° bis 60°, jeweils in Bezug zu einer horizontalen Aufstellfläche angegeben werden. Für den hier gezeigten Fall, dass die gewählte Aufstellfläche für das Anzeigesystem 100 auf dem Armaturenbrett 202 des betreffenden Kraftfahrzeugs 200 keine horizontale Referenzebene ist, sondern die Aufstellfläche für sich geneigt und gewölbt ist, ist die jeweilige Neigung und Wölbung des Armaturenbretts 202 bei der Auswahl des entsprechend einzustellenden Neigungswinkels 55 entsprechend zu berücksichtigen. Der Neigungswinkel 55 ist in Fig. 10 beispielsweise mit etwa 60° in Bezug zu einer horizontalen Referenzebene ausgewählt. Mit der erfindungsgemäßen Halterungsvorrichtung ist es somit möglich, den jeweiligen Neigungswinkel 55 der Halterungsvorrichtung 1 individuell an die jeweilige Aufstellposition anzupassen. Der jeweilige Neigungswinkel 55 kann individuell und unabhängig von den Gegebenheiten des jeweiligen Aufstellortes, beispielsweise unabhängig von der Neigung der Windschutzscheibe 201 eines Kraftfahrzeugs 200, ausgewählt bzw. eingestellt werden.

Die zwei Stützbeine 41,42 des verformbaren Stützbügels 40 sind dreidimensional verformt und dienen dazu, die erfindungsgemäße Halterungsvorrichtung 1 bzw. das Anzeigesystem 100 samt der Display-Anzeige 60 auch auf der gewölbten und geneigten Aufstellfläche des Armaturenbretts 202 in einem individuell gewählten Neigungswinkel 55 so zu fixieren, dass sowohl der Stützbügel 40 in seiner individuell verformten Lage, als auch die damit verbundene Halterungsvorrichtung 1 in ihrer Aufstellposition jeweils verharren.

### BEZUGSZEICHENLISTE

- 1: Halterungsvorrichtung
- 10: Trägerplatte
- 11: Vorderseite der Trägerplatte
- 12: Rückseite der Trägerplatte
- 13: Länge der Trägerplatte
- 14: Breite der Trägerplatte
- 15: Plattendicke der Trägerplatte
- 16: Rand der Trägerplatte
- 17: Geräteausnehmung der Trägerplatte
- 18: Länge der Geräteausnehmung
- 19: Breite der Geräteausnehmung
- 20: Befestigungsmittelausnehmung der Trägerplatte
- 21: (erste) Schellenausnehmung der Trägerplatte
- 22: (zweite) Schellenausnehmung der Trägerplatte
- 23: (dritte) Schellenausnehmung der Trägerplatte
- 25: Länge der Schellenausnehmung
- 26: Breite der Schellenausnehmung
- 28: Durchgangsbohrung für Schraube
- 30: Befestigungsmittel; Befestigungsschelle
- 31: (erste) Befestigungsschelle
- 32: (zweite) Befestigungsschelle
- 33: (dritte) Befestigungsschelle
- 34: Befestigungsplatte
- 35: Befestigungsschlaufe; Abschnitt einer Rohrschelle
- 36: lichte Weite der Befestigungsschlaufe
- 37: Befestigungsklemme; Klemmschelle
- 38: Klemmbügel
- 40: verformbarer Stützbügel
- 41: (erstes) Stützbein
- 42: (zweites) Stützbein
- 43: Länge des Stützbügels
- 44: Durchmesser des Stützbügels
- 45: Biegeradius des Stützbügels
- 46: Endkappe
- 48: Schlauchüberzug
- 49: (zweiter) Stützbügel
- 50: Befestigungsschraube
- 51: Beilagscheibe
- 60: Display-Anzeige
- 61: Vorderseite der Display-Anzeige
- 62: Rückseite der Display-Anzeige
- 63: Gehäuse der Display-Anzeige
- 64: Rand der Display-Anzeige
- 65: Bildschirm
- 66: Batteriefach
- 68: Bohrung
- 100: Anzeigesystem
- 200: Kraftfahrzeug
- 201: Windschutzscheibe
- 202: Armaturenbrett

## Patentansprüche

1. Halterungsvorrichtung (1) für eine Display-Anzeige (60), umfassend eine Trägerplatte (10) sowie zumindest einen verformbaren Stützbügel (40), wobei der zumindest eine Stützbügel (40) mit zumindest einem Befestigungsmittel (30) an der Trägerplatte (10) befestigbar ist und zumindest in befestigter Lage der zumindest eine Stützbügel (40) verformbar ist, um die Trägerplatte (10) in einem wählbaren Neigungswinkel (55) in Bezug zu einer Aufstellfläche aufzustellen.

2. Halterungsvorrichtung (1) nach Anspruch 1, **dadurch gekennzeichnet, dass** das zumindest eine Befestigungsmittel (30) eine Befestigungsschlaufe (35) oder eine Befestigungsklemme (37) zum Einstecken oder Einklemmen eines Abschnitts des zumindest einen Stützbügels (40) aufweist.

3. Halterungsvorrichtung (1) nach Anspruch 1 oder 2, **dadurch gekennzeichnet, dass** das zumindest eine Befestigungsmittel (30) einstückig mit der Trägerplatte (10) ausgebildet ist.

4. Halterungsvorrichtung (1) nach Anspruch 1 oder 2, **dadurch gekennzeichnet, dass** das zumindest eine Befestigungsmittel (30) ortsfest in einer Befestigungsmittelausnehmung (20) der Trägerplatte (10) einsteckbar ist.

5. Halterungsvorrichtung (1) nach Anspruch 4, **dadurch gekennzeichnet, dass** das zumindest eine Befestigungsmittel (30) eine Befestigungsschelle (31,32,33) mit einer Befestigungsplatte (34) sowie mit einer damit verbundenen Befestigungsschlaufe (35) oder Befestigungsklemme (37) ist, wobei die Befestigungsschelle (31,32,33) so geformt ist, dass in eingesteckter Lage in einer Befestigungsmittelausnehmung (20) der Trägerplatte (10) die Befestigungsplatte (34) zumindest abschnittsweise an einer Vorderseite (11) der Trägerplatte (10) anliegt, wobei die Befestigungsschlaufe (35) oder Befestigungsklemme (37) zum Einstecken eines Abschnitts des zumindest einen Stützbügels (40) von einer der Vorderseite (11) gegenüberliegenden Rückseite (12) der Trägerplatte (10) abragt.

6. Halterungsvorrichtung (1) nach einem der Ansprüche 1 bis 5, **dadurch gekennzeichnet, dass** zumindest zwei, vorzugsweise drei Befestigungsmittel (30) zum Befestigen des zumindest einen Stützbügels (40) an der Trägerplatte (10) vorgesehen sind.

7. Halterungsvorrichtung (1) nach einem der Ansprüche 1 bis 6, **dadurch gekennzeichnet, dass** ein einziger verformbarer Stützbügel (40) vorgesehen ist, wobei in befestigter Lage des Stützbügels (40) an der Trägerplatte (10) ein erster Endabschnitt des Stützbügels (40) ein erstes verformbares Stützbein (41) bildet sowie ein dem ersten Endabschnitt gegenüberliegender zweiter Endabschnitt des Stützbügels (40) ein zweites verformbares Stützbein (42) bildet, und wobei das erste Stützbein (41) und das zweite Stützbein (42) jeweils unabhängig voneinander einstellbar sind.

8. Halterungsvorrichtung (1) nach einem der Ansprüche 1 bis 6, **dadurch gekennzeichnet, dass** ein erster verformbarer Stützbügel (40) sowie ein weiterer, zweiter verformbarer Stützbügel (49) vorgesehen sind, wobei jeweils in befestigter Lage der erste verformbare Stützbügel (40) ein erstes verformbares Stützbein (41) und der zweite verformbare Stützbügel (49) ein zweites verformbares Stützbein (42) bildet, und wobei das erste Stützbein (41) und das zweite Stützbein (42) jeweils unabhängig voneinander einstellbar sind.

9. Halterungsvorrichtung (1) nach einem der Ansprüche 1 bis 8, **dadurch gekennzeichnet, dass** die Trägerplatte (10) mehrere, vorzugsweise vier, Durchgangsbohrungen (28) für Schrauben zum Befestigen einer Display-Anzeige (60) sowie vorzugsweise zumindest eine Geräteausnehmung (17) zur Aufnahme eines Gehäuseabschnitts (63,66) einer Display-Anzeige (60) aufweist.

10. Halterungsvorrichtung (1) nach einem der Ansprüche 1 bis 9, **dadurch gekennzeichnet, dass** der zumindest eine verformbare Stützbügel (40,49) ein Schwanenhals-Bügel ist, wobei der Schwanenhals-Bügel eine innere Spirale aus einem schraubenförmig gewendelten Runddraht sowie eine um die innere Spirale herumgewickelte äußere Spirale aus einem Dreikantdraht umfasst, wobei Spitzen des Dreikantdrahts der äußeren Spirale jeweils zwischen Runddrahtabschnitte der inneren Spirale eingedrückt sind, und wobei der Schwanenhals-Bügel vorzugsweise einen Schlauchüberzug (48) aus einem elastischen Kunststoff, insbesondere aus Silikonelastomer, aufweist.

11. Anzeigesystem (100) umfassend eine Halterungsvorrichtung (1) nach einem der Ansprüche 1 bis 10 sowie eine Display-Anzeige (60), welche an einer Vorderseite (11) der Trägerplatte (1) lösbar befestigbar ist.

12. Anzeigesystem (100) nach Anspruch 11, **dadurch gekennzeichnet, dass** die Display-Anzeige (60) mit Befestigungsschrauben (50) an der Vorderseite (11) der Trägerplatte (1) angeschraubt ist.

13. Anzeigesystem (100) nach Anspruch 11 oder 12, **dadurch gekennzeichnet, dass** durch Verformung des zumindest einen verformbaren Stützbeins (41,42) ein Neigungswinkel (55) der Trägerplatte (10) sowie damit einhergehend eine Neigung eines Bildschirms (65) der Display-Anzeige (60) in Bezug zu einer Aufstellfläche wählbar sind.

14. Anzeigesystem (100) nach einem der Ansprüche 11 bis 13, **dadurch gekennzeichnet, dass** in befestigter Lage der Display-Anzeige (60) an der Trägerplatte (1) ein Gehäuseabschnitt (63), vorzugsweise ein Batteriefach (66), der Display-Anzeige (60) in eine Geräteausnehmung (17) der Trägerplatte (10) eintaucht.

15. Verwendung eines Anzeigesystems (100) nach einem der Ansprüche 11 bis 14 zur Positionierung im Innenraum eines Kraftfahrzeugs (200), vorzugsweise zur Aufstellung auf einem Armaturenbrett (202) nahe an einer Windschutzscheibe (201), wobei erforderlichenfalls ein Neigungswinkel (55) der Trägerplatte (10) sowie eine Neigung eines Bildschirms (65) der Display-Anzeige (60) in Bezug zu einer Aufstellfläche, vorzugsweise in Bezug zu einer Neigung und/oder Krümmung des Armaturenbretts (202), wählbar sind.
